# EUROPEAN PATENT SPECIFICATION

(11) **EP 2 635 535 B1**
(45) Date of publication and mention of the grant of the patent: **24.01.2018**
(21) Application number: 11778852.1
(22) Date of filing: 28.10.2011
(51) Int. Cl.: C02F 9/00, C02F 1/04, C02F 1/28, C02F 1/42, C02F 1/44, C02F 1/52, C02F 1/56, C02F 1/72, C02F 3/12, C02F 103/38

(54) **PROCESS FOR TREATING WASTEWATER ORIGINATING FROM THE PREPARATION OF A HALOGENATED POLYMER**
VERFAHREN ZUR BEHANDLUNG VON ABWASSER AUS DER HERSTELLUNG VON HALOGENIERTEN POLYMEREN
PROCÉDÉ DE TRAITEMENT D'UNE EAU USÉE ISSUE DE LA PRÉPARATION D'UN POLYMÈRE HALOGÉNÉ

(30) Priority: 04.11.2010 FR 1059081
(43) Date of publication of application: 11.09.2013
(73) Proprietor: Solvay SA, 1050 Brussels (BE)
(72) Inventor: KEUSCH, Roland, 3078 Kortenberg (BE); VAN WEYNBERGH, Jacques, 1082 Brussels (BE); DOMPAS, Dirk Hugo, Jozef, 1981 Hofstade (BE)
(74) Representative: Vande Gucht, Anne
(86) International application number: PCT/EP2011/069005
(87) International publication number: WO 2012/059430

(56) References cited:
- CN-A- 101 343 132
- CN-A- 101 525 198
- US-A1- 2008 146 753
- US-B2- 7 351 342

## Description

The present invention relates to a process for treating wastewater originating from the preparation of a halogenated polymer.

It is known how to synthesize certain polymers, especially a number of halogenated polymers, in particular vinyl chloride polymers, in an aqueous medium.

Thus, for example, the polymerization of vinyl chloride may be carried out in batch mode according to a process said to be "in suspension", in an autoclave containing, in particular :
- water;
- the vinyl chloride monomer (VC) ;
- an initiator that is soluble in the monomer (usually an organic peroxide) ;
- a protective colloid (polyvinyl alcohols ; cellulose derivatives, etc.).

The aqueous suspension of particles of poly(vinyl chloride) (PVC) obtained, commonly referred to as a "slurry", is degassed then customarily subjected to a treatment with a countercurrent flow of steam in a "stripping" column in order to remove most of the residual VC. This suspension is then transported to large tanks equipped with a stirring system, then transferred to centrifugal dryers or filters that make it possible to remove a substantial amount of the mother liquors and to obtain a polymer "cake" that generally still contains around 20 % by weight of water. This cake is dried, usually in fluid-bed dryers.

The preparation of these halogenated polymers - in particular vinyl chloride polymers - in an aqueous medium therefore involves the use of large amounts of water. Thus, in the case mentioned above, the polymerization of VC according to the suspension process generates 5 tonnes of contaminated water (also referred to hereinbelow as "wastewater") per tonne of PVC produced (see Quan Wang et al. in Juluyixi, 12, pages 43-45 (2007)) (DOI : 1009 - 7937 (2007) 12 - 0043 - 03). Furthermore, the production of one tonne of PVC requires 2300 to 3000 litres of water, which must in addition be particularly pure, as a suspension medium for the polymerization itself.

Moreover, the mother liquors generated by the filtration or centrifugation of the aqueous suspension of polymer particles contain multiple impurities, in particular including:
- the polymer itself, in the form of very fine particles that were not able to be separated from the aqueous suspension;
- the inhibitor added at the end of the polymerization, which may be a base such as aqueous ammonia;
- the residues of the protective colloid;
- the residues of the initiator;
- dissolved salts;
etc.

The presence of these contaminants therefore makes a purification treatment of the wastewater obligatory before it is discharged into the environment. This treatment is usually a physicochemical treatment (PCT).

The discharging of the thus purified wastewater nevertheless remains practically inevitable since, irrespective of the effectiveness of the PCT, this wastewater cannot be reused, for example as an aqueous medium for the synthesis of halogenated polymers, in particular vinyl chloride polymers, especially because it is not, in spite of everything, pure enough and because the polymer microparticles that it contains, by functioning as polymerization nuclei in the aqueous medium, would be detrimental to the quality of a polymer that might subsequently be synthesized therein.

In order to attempt to solve these problems, it has recently been proposed (see document US 2008/0146753-A1) to reduce the amount of fully demineralized fresh water needed for the polymerization of vinyl monomers in an aqueous medium and to reduce the amount of wastewater to be discharged into the environment by purifying the reaction mixture, from which the polymer is separated off, by (micro) filtration and by recycling it to the polymerization.

Although this proposition allows the mother liquors to be purified enough to be able to recycle them to the polymerization, it does not solve the problem of reusing the purified water exiting the PCT.

One technique for purifying the wastewater generated by the suspension polymerization of VC, disclosed in Huaxue Yu Shengwu Gongcheng (Chemistry & Bioengineering), 2005, No. 9, pages 43-44 and 53 (DOI : 1672 - 5425 (2005) 09 - 0043 - 02), mentions replacing the secondary settling tank (clarifier) of a biological purification process using activated sludge with the combination of a bioreactor and of a membrane filtration process avoiding the use of a physicochemical process such as coagulation sedimentation with unsatisfactory effect. Although it is indicated that the purified water may be reused or discharged directly into the environment, this slow treatment appears unsuitable for being transposed to an industrial setting in view of its duration (the pilot trial described is carried out over 60 days) and it is not established whether the purity of the water obtained is sufficient to enable it to be reused for the polymerization.

CN101343132 discloses a method for the preparation of polyvinylchloride and for treating the wastewater originating therefrom. The multistep treatment includes a flocculation step, a treatment by a biological aerated filter and then by ultrafiltration. The present invention aims to solve these problems by providing a process that makes it possible to considerably reduce the consumption of fresh water needed for the preparation of halogenated polymers, in particular vinyl chloride polymers, by subjecting the wastewater generated by their preparation in an aqueous medium to a complete purification treatment that is sufficiently effective to be able to reuse it, in particular in polymerization, but which involves the fewest steps possible and consequently which is as inexpensive as possible.

For this purpose, the invention relates to a process for treating wastewater originating from the preparation of a halogenated polymer, as defined in claim 1. The expression "halogenated polymer" (also more simply called "polymer" in the present description), is understood to denote both homopolymers and copolymers derived from halogenated monomers. Among these, mention in particular may be made of homopolymers of halogenated monomers, such as vinyl chloride and vinylidene chloride ; vinyl fluoride and vinylidene fluoride ; trifluoroethylene, tetrafluoroethylene, chlorotrifluoroethylene and hexafluoropropylene ; fluoroacrylates ; fluorinated vinyl ethers, for example perfluorinated vinyl ethers bearing perfluoroalkyl groups containing from 1 to 6 carbon atoms. Mention may also be made of the copolymers that these halogenated monomers form with one another and the copolymers of one or more of these halogenated monomers with another ethylenically unsaturated monomer such as olefins, for example ethylene, propylene ; styrene derivatives and styrene ; halogenated olefins ; vinyl ethers ; vinyl esters such as for example vinyl acetate ; acrylic acids, esters, nitriles and amides and methacrylic acids, esters, nitriles and amides.

Preferably, the halogenated polymer is a chlorine-containing polymer. The expression "chlorine-containing polymer" is understood to mean both homopolymers and copolymers of chlorine-containing monomers. Among these, mention in particular may be made of homopolymers of chlorinated monomers, such as chloroolefins, for example vinyl chloride and vinylidene chloride ; chloroacrylates and chlorinated vinyl ethers, for example perchlorinated vinyl ethers bearing perchloroalkyl groups containing from 1 to 6 carbon atoms. Mention may also be made of the copolymers that these chlorine-containing monomers form with one another, such as for example copolymers of vinylidene chloride with another chlorinated monomer as defined above, and copolymers of one or more of the abovementioned chlorine-containing monomers with another ethylenically unsaturated monomer such as olefins, for example ethylene, propylene ; styrene derivatives and styrene ; halogenated olefins ; vinyl ethers ; vinyl esters such as for example vinyl acetate ; acrylic acids, esters, nitriles and amides and methacrylic acids, esters, nitriles and amides.

Particularly preferably, the halogenated polymer is a vinyl chloride polymer.

The expression "vinyl chloride polymer" is understood to mean both homopolymers of vinyl chloride (vinyl chloride is then the only monomer) and its copolymers (one or more other monomers is (are) then polymerized with the vinyl chloride) with other ethylenically unsaturated monomers, whether these are halogenated (chloroolefins, for example vinylidene chloride ; chloroacrylates ; chlorinated vinyl ethers such as for example perchlorinated vinyl ethers bearing perchloroalkyl groups containing from 1 to 6 carbon atoms) or non-halogenated (olefins such as for example ethylene, propylene ; styrene derivatives and styrene ; vinyl ethers ; vinyl esters such as for example vinyl acetate ; acrylic acids, esters, nitriles and amides ; methacrylic acids, esters, nitriles and amides). Vinyl chloride homopolymers and copolymers of vinyl chloride with a halogenated or non-halogenated comonomer advantageously containing at least 50 %, preferably at least 60 %, particularly preferably at least 70 % and very particularly preferably at least 85 % by weight of monomeric units derived from vinyl chloride are particularly preferred. Vinyl chloride homopolymers and copolymers of vinyl chloride with vinyl acetate are very particularly preferred. Vinyl chloride homopolymers are truly very particularly preferred.

In the present description, the terms "monomer" and "polymer"are used in the singular and in the plural indiscriminately.

The polymerization step included in the preparation of the halogenated polymer, in particular the vinyl chloride polymer, from which the wastewater treated according to the process of the invention originates, is carried out in an aqueous medium.

In the present description, the term "medium" is understood to mean the contents of the polymerization reactor with the exception of the monomer introduced and the polymer formed.

The expression "a step of polymerizing ... carried out in an aqueous medium" is understood to mean, in the present description, any polymerization carried out in aqueous dispersion, i.e. both a polymerization carried out in aqueous suspension and a polymerization carried out in aqueous emulsion or else a polymerization carried out in aqueous microsuspension. These polymerizations in aqueous dispersion are advantageously performed in accordance with a radical mechanism.

The expression "polymerization in aqueous suspension" is understood to mean any polymerization process performed with stirring in an aqueous medium in the presence of dispersants and oil-soluble radical initiators.

The expression "polymerization in aqueous emulsion" is understood to mean any polymerization process performed with stirring in an aqueous medium in the presence of emulsifiers and water-soluble radical initiators.

The expression "polymerization in aqueous microsuspension", also referred to as polymerization in (partially or completely) homogenized aqueous dispersion, is understood to mean any polymerization process performed with stirring in an aqueous medium in the presence of emulsifiers and oil-soluble radical initiators and in which an emulsion of droplets of monomers is produced by virtue of powerful mechanical stirring.

The polymerization step included in the preparation of the halogenated polymer, in particular the vinyl chloride polymer, from which the wastewater treated according to the process of the invention originates, is preferably carried out in aqueous suspension. The polymer is then, in this case, advantageously a solid polymer.

The step of polymerization, preferably in aqueous suspension, is preferably carried out within a reactor, preferably a stirred reactor.

Polymerization in aqueous suspension is particularly preferred when at least one halogenated monomer used is vinyl chloride (VC).

It is the latter step of polymerization, in particular of at least one monomer including vinyl chloride, carried out in aqueous suspension, which will be described in greater detail hereinbelow for the purposes of illustrating the invention, without however limiting the scope of the latter.

This step of polymerization in aqueous suspension is advantageously carried out with the intervention of oil-soluble radical initiators, such as peroxides, for example dilauryl peroxide, di-*t*-butyl peroxide and dibenzoyl peroxide ; hydroperoxides, for example *t*-butyl hydroperoxide ; peresters, for example *t*-butyl perpivalate, *t*-butyl 2-ethyl hexanoate and *t*-butyl perneodecanoate ; percarbonates, for example diethyl peroxydicarbonate and diisopropyl peroxydicarbonate and diethylhexyl peroxydicarbonate ; and such as azo compounds, for example azobisisobutyronitrile and 2,2'-azobis(methoxy-2,4-dimethylvaleronitrile. The amount of oil-soluble radical initiator used advantageously varies between 0.2 and 2.0 ‰ by weight relative to the weight of monomer(s) used.

This step of polymerization in aqueous suspension is advantageously carried out in the presence of dispersants or protective colloids, such as for example, water-soluble cellulose ethers, partially saponified polyvinyl alcohol and mixtures thereof. It is also possible to use surfactants at the same time as the dispersants. The amount of dispersant used advantageously varies between 0.7 and 2.0 ‰ by weight relative to the weight of monomer(s) used.

This step of polymerization in aqueous suspension may optionally be carried out in the presence of additives other than the abovementioned additives (dispersants, surfactants) for improving the implementation of the process and/or the characteristics of the resulting polymer. Examples of other conventional additives are chain transfer agents, anti-scaling agents, antistatic agents, antifoaming agents, cosolvents and pH regulators, such as buffer salts, for example sodium phosphate, polyphosphate and hydrogen carbonate.

The temperature of the polymerization, preferably in aqueous suspension, is advantageously between 30 and 100°C, preferably between 30 and 90°C, more particularly between 45 and 85°C. The polymerization, preferably in aqueous suspension, is advantageously carried out under a pressure of between 0.3 and 2.5 MPa, preferably between 0.5 and 1.9 MPa.

The step of polymerization, preferably in aqueous suspension, is advantageously continued until 60 to 98 % by weight, preferably 80 to 95 % by weight of the monomer(s) is (are) converted with a concomitant pressure drop within the reactor. In the preferred case of the aqueous suspension, a polymerization inhibitor, for example a base such as aqueous ammonia or a phenol, is then added in an amount advantageously between 0.01 and 0.5 ‰ by weight relative to the weight of monomer(s) used.

The content of solid polymer of the aqueous suspension obtained at the end of the step of polymerizing in aqueous suspension is advantageously between 20 and 45 % by weight, preferably between 25 and 40 % by weight.

The expression "from which the unreacted monomer ... have then been separated" is understood to mean, for the purposes of the present invention, that the monomer that has not reacted which remains at the end of the polymerization step, preferably in the aqueous suspension obtained ("slurry") when the polymerization step is carried out in aqueous suspension, as a consequence of the incomplete conversion of the monomer, is separated.

The step of separating the unreacted monomer may be carried out by any known means. In the preferred case of the polymerization in aqueous suspension, this removal may be performed conventionally by degassing the suspension, usually carried out in a depressurization tank, followed by a distillation operation or, preferably, steam "stripping" of the residual monomer.

The removal of the residual monomer may advantageously be carried out by supplying a stripping column equipped with perforated plates, via its upper portion, with the previously depressurized aqueous suspension. (By way of example, in the case where the monomer involved in the polymerization step is VC, the VC content of the aqueous suspension at the stripping column inlet is usually between 3000 and 30000 ppm (0.3 to 3 %). The base of the stripping column is supplied with steam and the aqueous suspension is "stripped" countercurrently via the perforated plates of the column. Among the columns that can be used for the stripping, mention may be made, for example, of the column described in the French patent application published under the number 2 940 137, the content of which is incorporated by reference into the present application.

The monomer removed from the aqueous suspension in the stripping column is advantageously, for ecological and economic reasons, recycled to the polymerization step. (By way of example, in the case where the monomer is VC, the amount of VC recycled may represent between around 1 % and around 3 % of the total weight of VC used in the polymerization step and the amount of this monomer still present in the aqueous suspension leaving the stripping column is advantageously less than 30 ppm, preferably less than 10 ppm).

The expression "from which the polymer obtained ... have then been separated" is understood to mean, for the purposes of the present invention, that the polymer obtained at the end of the polymerization step, preferably in the aqueous suspension obtained ("slurry") when the polymerization step is carried out in aqueous suspension, is separated, preferably after separation of the unreacted monomer.

The step of separating the polymer obtained may be carried out by any known means. In the preferred case of polymerization in aqueous suspension, the aqueous suspension drawn off from the device for removing the residual monomer is then advantageously subjected to a liquid-solid separation treatment that aims to reduce the water content thereof. This treatment usually comprises a settling operation, a centrifugal dewatering operation or, preferably, a succession of the two operations. Following this treatment, the water content of the resulting solid polymer is advantageously no more than between 10 and 35 %, preferably between 15 and 30 % by weight. The solids content of the liquid phase (also referred to as "mother liquors") separated from the solid polymer is, itself, advantageously between 10 and 2500 mg/1.

Advantageously, the solid polymer ("cake") resulting from the aforementioned liquid-solid separation treatment is subjected to a final drying carried out in any drying device known for this purpose, such as rotary drum dryers and fluid-bed dryers.

The main objective of the present invention lies in a process for treating wastewater originating from the preparation of a halogenated polymer, in particular a vinyl chloride polymer, preferably in aqueous suspension, described above.

The term "wastewater" (also referred to as "contaminated water" in the present description) is understood in the present description to mean any material containing more than 50 % by weight, more particularly more than 70 % by weight of water in the liquid, vapour or solid state, preferably in the liquid state, in which water constituents known as "contaminants" in the present description are present, in suspended, dispersed or dissolved form.

The term "contaminants" is understood in the present description to mean all the constituents, other than water, present in the wastewater in the form of chemical compounds suspended or dispersed in the water and/or in the form of ions or chemical compounds dissolved in the water.

In the preferred case of polymerization in aqueous suspension, the wastewater is of various origins, especially :
- water (E1) resulting from the condensation of the steam supplying the stripping column, when it is this device that is used for removing the residual monomer that has not been converted during the polymerization step ;
- mother liquors (E2) originating from the liquid-solid separation treatment (settling, centrifugal dewatering, etc.) of the aqueous suspension drawn off from the device for removing the residual monomer ;
- water (E3) resulting from the final drying of the solid polymer ("cake") from the liquid-solid separation treatment;
- water (E4) used for rinsing and washing the various devices used for preparing the halogenated polymer : among these devices, mention may be made of :
- the reactor within which the polymerization step is carried out;
- the optional stripping column ;
- the ducts and pipes connecting these devices ;
- various purge waters (E5), such as the purge water from the optional cooling towers for chilling the cooling water of the reactor (jacket), the optional residual water and purge water originating from the manufacture of the radical initiator, etc.

In the preferred case of the polymerization in aqueous suspension, the contaminants present in the wastewater may be, non-limitingly :
- (C1) the halogenated polymer, in particular the vinyl chloride polymer, itself, in the form of very fine particles, the average diameter of which is usually between 10 and 100 µm, more particularly between 25 and 60 µm, and which have not been separated from the aqueous suspension during the liquid-solid separation treatment to which it has been subjected ;
- (C2) the inhibitor added at the end of the polymerization, which may be a base such as aqueous ammonia or phenol, for example ;
- (C3) the residues of the dispersant or protective colloid (for example :
   cellulose ether, partially saponified polyvinyl alcohol) not incorporated into the polymer particles, usually representing a COD (chemical oxygen demand) of 50 to 5000, most often from 100 to 3500 mg/l;
- (C4) dissolved inorganic and organic salts usually representing a conductivity from 70 to 10000 µS/cm at 25°C ;
- (C5) halogen ions originating from residues of the monomer and the unreacted residual monomer itself;
- (C6) other possible contaminants, such as organic compounds that are dissolved, dispersed or in suspension, decomposition residues of the initiator and of additives added to the polymerization step, etc.

As has been mentioned, the wastewater, at least one portion of which is treated according to the process of the present invention, may originate from various sources. In the preferred case of polymerization in aqueous suspension, it is especially the waters (E1) to (E5) mentioned above.

In the preferred case of polymerization in aqueous suspension, the contaminants which it is advantageous to eliminate as thoroughly as possible from this wastewater are, non-limitingly, at least some, and preferably all, of the contaminants (C1) to (C6) identified above.

The process according to the invention preferably takes place at the earliest when the unreacted monomer and the polymer obtained have been separated from the aqueous medium in which the step of polymerization, preferably in aqueous suspension, has been carried out. In the preferred case of polymerization in aqueous suspension, it is therefore advantageously applied at least to the treatment of the wastewater (E2), preferably at least to the treatment of the wastewaters (E1) and (E2), particularly preferably at least to the treatment of the wastewaters (E1), (E2) and (E4) and, more particularly, to the treatment of all of the wastewaters (E1) to (E5).

The process according to the invention is based on a step of physicochemical treatment of a portion of the wastewater originating from the preparation of a halogenated polymer.

The expression "physicochemical treatment ("PCT" in abbreviated form) of the wastewater", is understood, for the purposes of the present invention, to mean any treatment of wastewater using physical means combined with the addition of chemical reactants. Therefore, the PCT advantageously does not include biological treatment. The PCT comprises an agitation (causing advantageously an aeration) of the wastewater and also a settling operation (also known as clarification), advantageously eliminating a large proportion of contaminants, combined, in order to advantageously render it better performing, with the use of coagulants (for example iron salts or aluminium salts) and flocculants (for example activated silica, polyelectrolytes) which advantageously cause the particles in suspension to agglomerate and accelerate the falling thereof in the form of clusters of solids known as "flocs".

According to the invention, a portion of the wastewater undergoes a first purification via at least one physical treatment.

The expression "physical treatment ("PT" in abbreviated form) of the wastewater", is understood, for the purposes of the present invention, to mean treatment of wastewater using solely physical means. The PT of the wastewater comprises a filtration of the wastewater. In the preferred case of polymerization in aqueous suspension, this PT is applied, in particular but not exclusively, to the purification of contaminants (C4) and (C6).

According to the invention, the first purification undergone by a portion of the wastewater comprises a filtration.

The filtration is preferably a microfiltration or an ultrafiltration. The microfiltration and the ultrafiltration are advantageously carried out especially for eliminating very fine solid particles present in the wastewater treated. The filtering element may be a tube, a plate or a membrane. The filtering element is preferably a membrane. The material of the filtering element may be a ceramic filter, a sintered metal, metallic fibres or polymeric membranes. Reference is advantageously made to microfiltration when the diameter of the pores of the filtering element is greater than 0.1 µm and when its structure is relatively symmetrical with open pores. Reference is advantageously made to ultrafiltration when the diameter of the pores of the filtering element is less than 0.1 µm and when its structure is asymmetric with open pores. In both cases, it may be filtration known as "cross-flow (CF) filtration" considering the tangential introduction of the effluent to be filtered, filtration known as "cross-rotation (CR) filtration" which involves the presence of a rotary mechanical element preventing the formation of deposits on the filtering element or the combination of the two. Particularly preferably, the filtration, preferably microfiltration or ultrafiltration, is a filtration known as "cross-flow" and "cross-rotation" filtration. A "cross-flow" and "cross-rotation" ultrafiltration is very particularly preferred.

Preferably, in addition and downstream of the filtration described above (variant 1), a step of chemical purification via ion exchange (IE) or a step of physical purification via reverse osmosis (RO) is carried out. These IE or RO purification steps are well known in the technical field of wastewater purification and contribute in particular to demineralizing the wastewater, that is to say, in the preferred case of polymerization in aqueous suspension, purifying it of dissolved contaminants (C4) and (C6).

IE is advantageously a reversible chemical reaction in which an ion in solution is exchanged with an ion of similar charge bonded to a solid particle, often an inorganic zeolite or a synthetic organic resin. In practice, cations (Ca⁺⁺, Na⁺, etc., cation exchange resin) are advantageously exchanged with protons and anions (carbonate, sulphate, chromate, chloride, etc.) are advantageously exchanged with a hydroxyl group. It is common, depending on the conductivity of the wastewater, to advantageously combine cation exchange resins that are respectively weakly or strongly acidic, with anion exchange resins that are respectively strongly or weakly basic.

RO is advantageously a physical process for concentrating ions dissolved in the wastewater based on the principle of reversing the osmosis process, obtained by exerting, in one of the compartments separated by a membrane, a hydrostatic pressure which exceeds the osmotic pressure. Thus, water is advantageously forced to leave the pressurized compartment in spite of the increase in the concentration of dissolved ions which occurs therein, and the dilution which takes place in the other compartment by increasing the pressure.

The concentrates resulting from the filtration and optionally from the IE or the RO are sent to the PCT.

According to a second embodiment variant (variant 2) of the process outside of the invention, the first purification undergone by at least one portion of the wastewater comprises :
- a step of vaporization of the wastewater in order to obtain vaporized wastewater; and
- a step of condensation of said vaporized wastewater in order to obtain condensed wastewater.

The term "vaporization" will be interpreted in its conventional sense as defining the phase transition from the liquid state to the gaseous (vapour) state.

The term "condensation" will be interpreted in its conventional sense as defining the phase transition from the gaseous (vapour) state to the liquid state.

The vaporization of at least one portion of the wastewater in order to obtain vaporized wastewater and the condensation of the vaporized wastewater in order to obtain condensed wastewater may be carried out in any device known for this purpose. The vaporization step and the condensation step are advantageously carried out in a device chosen from evaporators. Evaporators that can be used are plate evaporators, agitated evaporators, spiral tube evaporators, recirculation-type evaporators, fluidized bed evaporators, climbing film evaporators and falling film evaporators, in particular single-effect and multiple-effect falling film evaporators.

The vaporization step and the condensation step are preferably carried out in a falling film evaporator, in particular because this type of evaporator is well suited to the vaporization of liquids that are moderately loaded with solids, such as the contaminated water to be treated according to the invention. Evaporators of this type also advantageously make it possible to operate in a low "delta T" zone, advantageously below 15°C, preferably below 10°C and more particularly between 5 and 8°C. The expression "delta T" is understood to mean the difference in temperature between the contaminated water that is vaporized in the evaporator and the wastewater condensed after condensation.

The efficiency of the evaporator is advantageously optimal when the wastewater enters therein at its boiling point and is suitably distributed between the externally-heated constituent tubes of the evaporator, the internal walls of which are uniformly wetted. This is why the head of the evaporator is advantageously provided with a device for distributing the liquid between the various tubes.

The pressure at which the vaporization step and the condensation step of the process according to the invention are carried out is advantageously chosen as a function of the temperature at which it is desired to vaporize and then condense the contaminated water. The vaporization and condensation steps may be carried out for example at a pressure advantageously between 0 and 0.1 MPa. It is preferable to work at atmospheric pressure, in particular for limiting the volumes of vaporized wastewater to be generated for the economy of the process, for limiting any foaming phenomenon and for preventing ingress of inert gases.

The vaporization of the wastewater according to the invention advantageously makes it possible to purify it by concentrating the non-volatile contaminants. The attainable concentration factor of the contaminants depends in particular on their initial concentration in the wastewater and on their physicochemical nature, the limiting factor often being the viscosity of the concentrated non-volatile contaminants (also known as "concentrates") and also the foaming and/or scaling tendency of the evaporator.

Embodiment variant 2 of the first purification also includes a step of condensing the vaporized wastewater to "condensates", in particular that are purified of contaminants via their prior vaporization.

Advantageously, the energy of the process is optimized by using one or other of the methods hereinbelow, taken separately or in combination :
- Multi-effect evaporation, in particular by carrying out the vaporization followed by the condensation of the wastewater in several successive evaporators arranged in series that are known as "effects". The vaporized wastewater resulting from the first effect advantageously condenses at the second effect and the energy liberated by the condensation is used to vaporize the wastewater that is found therein. The third evaporator advantageously acts as a condenser for the vaporized wastewater resulting from the second effect and so on. The vaporized wastewater of the last effect is advantageously used to heat up the wastewater of the first effet. In the absence of heat losses, it is therefore advantageously possible to reuse the latent heat of vaporization a large number of times : the more effects there are, the lower the energy cost will be. It may thus be preferable to use several falling film evaporators arranged in series ; the external vapour consumption needed for their operation is then greatly reduced, without providing mechanical energy.
- Thermal recompression of the vaporized wastewater, using for example an ejector;
- Mechanical recompression of the vaporized wastewater ; this technique, often called "evapo-concentration with mechanical vapour recompression (MVR)" when coupled to a vaporization, advantageously makes it possible to substantially reduce the consumption of vapour at the expense of a limited provision of electrical energy and is more compact than multi-effect evaporation. It advantageously requires a rotating recompression machine which may be for example a compressor. Compressors that can be used are "reciprocating" compressors, rotary compressors, screw compressors, axial compressors, centrifugal compressors, single-effect and multiple-effect compressors and fans. These compressors may be used for recompressing the vaporized wastewater resulting from any evaporator mentioned above. Advantageously, the compression ratios to be achieved correspond to delta T values of greater than 4°C, preferably of greater than 6°C.

The vaporization step and the condensation step are preferably carried out in an evaporator, preferably a falling film evaporator, with mechanical recompression of the vaporized wastewater. Within this context, it has proved particularly advantageous to couple a fan, as compressor, with a falling film evaporator.

The vaporized wastewater, optionally recompressed as indicated above, may advantageously provide the heat needed for the vaporization of the contaminated water by condensing via heat exchange in the appropriate parts of the evaporator. The resulting condensates may then advantageously be used to preheat said wastewater before the vaporization thereof, in particular if this water is not available at its boiling point in the evaporator. The condensates are advantageously produced at a few degrees above the inlet temperature of the contaminated water.

The concentrates resulting from the vaporization of the contaminated water according to embodiment variant 2 of the first purification are advantageously extracted, preferably from the bottom of the evaporator and are advantageously sent to the PCT, preferably after cooling.

A third embodiment variant (variant 3) of the first purification of the process according to the invention may comprise variant 1 and variant 2, operating in parallel.

Thus, the process according to the invention is preferably characterized in that the first purification undergone by at least one portion of the wastewater comprises, on the one hand, a filtration and, on the other hand
- a step of vaporization of the wastewater in order to obtain vaporized wastewater; and
- a step of condensation of said vaporized wastewater in order to obtain condensed wastewater;
operating in parallel.

According to the invention, the water originating from the PCT is subjected to a final purification step comprising a biochemical filtration carried out using a membrane bioreactor (MBR). The MBR contains one or more membranes. Preferably, it contains only one thereof. The term "membrane" is used indiscriminately in the singular and in the plural in the present description.

In the particular case of the polymerization in aqueous suspension, this biochemical filtration is advantageously carried out especially to eliminate the contaminants (C2) and (C3) which may still be present in the water originating from the PCT.

The final purification step comprising a biochemical filtration carried out using an MBR advantageously involves the combination of a bioreactor and a membrane filtration process. The membranes may be placed after the bioreactor or submerged in the latter. They may be mineral or organic and of the type used in microfiltration or in ultrafiltration.

The bioreactor is advantageously the site of the biodegradation of the wastewater. It is a biological reactor in which a biomass suitable for microorganisms (bacteria) advantageously grows. The latter advantageously degrade the contaminants (more particularly the COD) present, in particular in the case of the polymerization in aqueous suspension the contaminants (C3), owing to the introduction of oxygen via an aeration system. The second important step of the MBR is advantageously the separation, owing to the membranes, of the purified water from the digestion sludge that uses microorganisms for the digestion.

The step of final purification of the wastewater according to the process of the invention preferably comprises, in addition and downstream of the biochemical filtration, a step of physical purification comprising a multimedia filter (MMF) or of chemical purification comprising an activated carbon filter (AC). In the particular case of the polymerization in aqueous suspension, these steps of purification via MMF or AC help in particular to purify the wastewater of contaminants (C1) and (C5).

The MMF is advantageously an improved version of the sand filter and may contain up to three, and even four, layers of filter media. For example, an MMF may comprise an upper layer of low-density, coarse particles of coal (anthracite), an intermediate layer of smaller particles of calcined aluminium silicate or of sand and a lower layer of heavy garnet.

The AC is advantageously based on the capacity of activated carbon to adsorb organic molecules.

The step of final purification of the wastewater according to the process of the invention more preferably comprises, in addition and downstream of the biochemical filtration and of the step of physical purification (MMF) or of chemical purification (AC), a step of purification via ion exchange (IE) or via reverse osmosis (RO). All the definitions, notes, limitations, characteristics and preferences defined above in connection with IE and RO for the process according to the invention advantageously apply also to the step of final purification of the wastewater according to the process of the invention.

The main objective of this treatment is to give at least one portion of this wastewater a purity such that it can be reused for the preparation of the halogenated polymer, in particular recycled to the polymerization step.

Depending on its degree of purity, all the water obtained (water resulting from the first purification by at least one physical treatment and water resulting from the final purification step) by the process according to the invention may be, separately or in possible combination, recycled to one of the steps for preparing the halogenated polymer, in particular the vinyl chloride polymer, and/or into any other industrial plant similar to the unit for preparing the halogenated polymer.

As examples of recycling water obtained by the process according to the invention to one of the steps for preparing the halogenated polymer, in particular the vinyl chloride polymer, mention may especially be made of:
- recycling as make-up water to the step of polymerization, carried out in an aqueous medium, of the halogenated monomer, in particular of vinyl chloride ;
- recycling as make-up water to the cooling towers for chilling the cooling water of the reactor (jacket);
- recycling as rinsing and washing water for the various devices used for the preparation of the halogenated polymer, in particular of the vinyl chloride polymer, preferably water (E4) in the preferred case of the polymerization in aqueous suspension, with a very particular preference for recycling as rinsing and washing water for the stripping column ;
- in the preferred case of the polymerization in aqueous suspension, recycling as rinsing water for the aqueous suspension of halogenated polymer particles, in particular of PVC particles ("slurry").

As examples of recycling water obtained by the process according to the invention into any other industrial plant similar to the unit for preparing the halogenated polymer, in particular the vinyl chloride polymer, mention may especially be made of:
- recycling as rinsing water for the plants in which the first purification and the final purification step of the wastewater treatment process according to the invention take place ;
- recycling for the production of hot water and/or steam, for example in boilers.

Advantageously, the water obtained by the process according to the invention is recycled to one of the steps for preparing the halogenated polymer, in particular the vinyl chloride polymer, preferably in aqueous suspension. Preferably, the water obtained by the process according to the invention is recycled as make-up water to the polymerization step for preparing the halogenated polymer, in particular the vinyl chloride polymer, preferably in aqueous suspension.

Irrespective of the use of the treated water obtained by the process according to the invention within the process for preparing the halogenated polymer, the process according to the invention makes it possible, in any case, to significantly reduce the amount of fresh pure water, in particular the demineralized pure water needed for the polymerization step, needed for preparing the halogenated polymer, in particular the vinyl chloride polymer, and for the various devices that this preparation requires. Advantageously, the saving made in fresh pure water may reach at least 30 %, preferably at least 40 %, particularly preferably at least 60 %, or even 80 %.

Furthermore, the quality of the portion of this water possibly released into the environment at the end of the final purification is perfectly acceptable for the environment.

The process according to the invention also has the advantage of being characterized by the fact that it comprises very few treatment steps and consequently that it is less expensive than the processes according to the prior art. The invention relates to a process for preparing a halogenated polymer, in particular a vinyl chloride polymer, comprising a step of polymerizing at least one halogenated monomer, in particular at least one monomer including vinyl chloride, carried out in an aqueous medium, from which the unreacted monomer and the polymer obtained have then been separated, and comprising the subsequent treatment of the wastewater originating from this preparation as defined in Claim 1 and the claims that are dependent thereon.

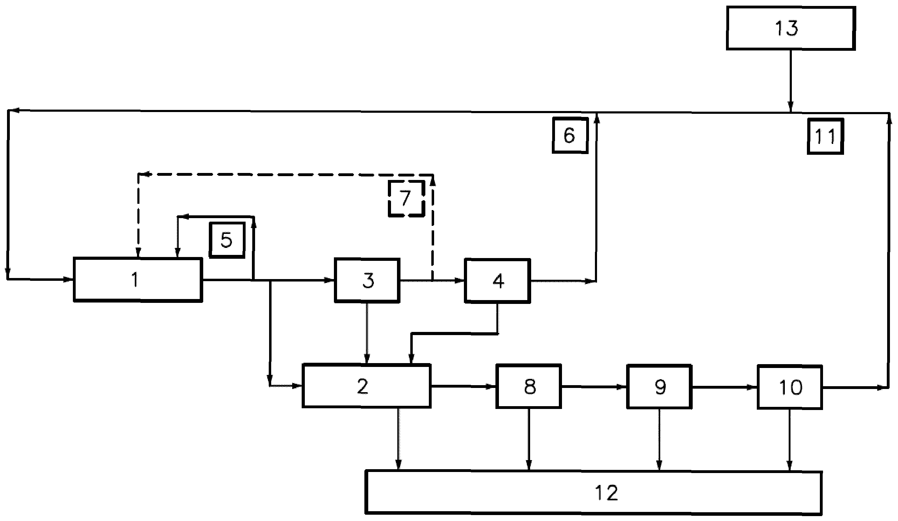

The wastewater treatment process according to the invention will now be illustrated with reference to the drawing accompanying the present description. This drawing consists of the appended Figure 1, which is a block diagram schematically representing one practical embodiment of the process according to the invention.

One portion (rich in contaminants (C1)) of the wastewater 1 originating from the preparation of a vinyl chloride polymer comprising a step of aqueous suspension polymerization of VC carried out in an aqueous medium, from which the unreacted VC and the polymer obtained have then been separated, is sent to a PCT 2 and another portion (rich in contaminants (C4) and (C6)) is sent to an ultrafiltration (CF-CR) 3 followed by an IE or RO 4. Wastewater that requires no purification for the use for which it is intended is recycled to 1 via the pump 5. The purified water is, for one portion, recycled via the pump 6 (and optionally via the pump 7) to 1 and, for another portion (as a function of the higher degree of purity that it is possibly desired to impart thereto), transferred to the PCT 2. The water leaving the PCT 2 is partly, preferably entirely, subjected to a more thorough final purification step via successive passes through an MBR 8, through an optional MMF/AC 9 and through an IE/RO device 10. The water thus purified is recycled to 1 via the pump 11 and the concentrates from the various treatments 2, 8, 9 and 10 are discharged 12. If necessary, pure make-up water may be introduced via the tank 13.

## Claims

1. Process for the preparation of a halogenated polymer and for treating wastewater originating therefrom (1), which includes:
- a step of polymerizing at least one halogenated monomer carried out in an aqueous medium, from which the unreacted monomer and the polymer obtained have then been separated,
and wherein the treatment of the wastewater (1) comprises :
- subjecting one portion of the wastewater to a first purification via at least one physical treatment (3) comprising a filtration of the wastewater;
- subjecting another portion of the wastewater and the concentrates resulting from the filtration (3) to a step of physico-chemical treatment (2), wherein the physico-chemical treatment (2) comprises an agitation of the wastewater and also a settling operation combined with the use of coagulants and flocculants;
- a step of final purification, comprising a biochemical filtration (8) carried out using a membrane bioreactor containing one or more membranes, of the water originating from the physicochemical treatment.

2. Process according to Claim 1, **characterized in that** the halogenated polymer is a vinyl chloride polymer.

3. Process according to Claim 1, **characterized in that** the coagulants are selected from iron salts and aluminium salts and the flocculants are selected from activated silica and polyelectrolytes.

4. Process according to Claim 1, **characterized in that** the filtration (3) is a microfiltration or an ultrafiltration.

5. Process according to Claim 1 or 4, **characterized in that**, in addition and downstream of the filtration (3), a step of chemical purification via ion exchange or a step of physical purification via reverse osmosis (4) is carried out on the permeate.

6. Process according to Claim 1, **characterized in that** the step of final purification of the wastewater (1) comprises, in addition and downstream of the biochemical filtration (8), a step (9) of physical purification comprising a multimedia filter or of chemical purification comprising an activated carbon filter.

7. Process according to Claim 6, **characterized in that** the step of final purification of the wastewater (1) comprises, in addition and downstream of the biochemical filtration (8) and of the step of physical purification or of chemical purification (9), a step of purification via ion exchange or via reverse osmosis (10).

8. Process according to Claim 1, **characterized in that** the water obtained is recycled to one of the steps for preparing the halogenated polymer.

9. Process according to Claim 1, **characterized in that** the water obtained is recycled as make-up water to the polymerization step for preparing the halogenated polymer.

## Patentansprüche

1. Verfahren zur Herstellung eines halogenierten Polymers und zur Behandlung von daraus stammendem Abwasser (1), das umfasst:
- einen Schritt des Polymerisierens von mindestens einem halogenierten Monomer, ausgeführt in einem wässrigen Medium, aus dem das nicht umgesetzte Monomer und das erhaltene Polymer dann getrennt wurden,
und wobei die Behandlung des Abwassers (1) umfasst:
- Unterziehen eines Teils des Abwassers einer ersten Reinigung über mindestens eine physikalische Behandlung (3), umfassend eine Filtration des Abwassers;
- Unterziehen eines anderen Teils des Abwassers und der Konzentrate, die aus der Filtration (3) resultieren, einem Schritt der physikochemikalischen Behandlung (2),
wobei:
- die physikochemikalische Behandlung (2) eine Bewegung des Abwassers und auch einen Absetzvorgang kombiniert mit der Verwendung von Koagulations- und Flockungsmitteln umfasst;
- einen Schritt der Endreinigung, umfassend eine biochemische Filtration (8), ausgeführt unter Verwendung eines Membranbioreaktors enthaltend eine oder mehrere Membranen, des Wassers, das aus der physikochemikalischen Behandlung stammt.

2. Verfahren nach Anspruch 1, **dadurch gekennzeichnet, dass** es sich bei dem halogenierten Polymer um ein Vinylchloridpolymer handelt.

3. Verfahren nach Anspruch 1, **dadurch gekennzeichnet, dass** die Koagulationsmittel aus Eisensalzen und Aluminiumsalzen ausgewählt sind und die Flockungsmittel aus aktivierter Kieselsäure und Polyelektrolyten ausgewählt sind.

4. Verfahren nach Anspruch 1, **dadurch gekennzeichnet, dass** es sich bei der Filtration (3) um eine Mikrofiltration oder eine Ultrafiltration handelt.

5. Verfahren nach Anspruch 1 oder 4, **dadurch gekennzeichnet, dass** zusätzlich und nachgeschaltet der Filtration (3), ein Schritt der chemischen Reinigung über Ionenaustausch oder ein Schritt der physikalischen Reinigung über Umkehrosmose (4) mit dem Permeat durchgeführt wird.

6. Verfahren nach Anspruch 1, **dadurch gekennzeichnet, dass** der Schritt der Endreinigung des Abwassers (1), zusätzlich und nachgeschaltet der biochemischen Filtration (8), einen Schritt (9) der physikalischen Reinigung, umfassend einen Mehrschichtfilter, oder der chemischen Reinigung, umfassend einen Aktivkohlefilter, umfasst.

7. Verfahren nach Anspruch 6, **dadurch gekennzeichnet, dass** der Schritt der Endreinigung des Abwassers (1), zusätzlich und nachgeschaltet der biochemischen Filtration (8) und dem Schritt der physikalischen Reinigung oder der chemischen Reinigung (9), einen Schritt der Reinigung über Ionenaustausch oder über Umkehrosmose (10) umfasst.

8. Verfahren nach Anspruch 1, **dadurch gekennzeichnet, dass** das erhaltene Wasser zu einem der Schritte zur Herstellung des halogenierten Polymers zurückgeführt wird.

9. Verfahren nach Anspruch 1, **dadurch gekennzeichnet, dass** das erhaltene Wasser als Zusatzwasser zu dem Polymerisationsschritt zur Herstellung des halogenierten Polymers zurückgeführt wird.

## Revendications

1. Procédé de préparation d'un polymère halogéné et de traitement d'une eau résiduaire en résultant (1), qui comporte :
- une étape de polymérisation d'au moins un monomère halogéné effectuée dans un milieu aqueux, à partir duquel le monomère non réagi et le polymère obtenu ont été séparés,
et où le traitement de l'eau résiduaire (1) comprend :
- la soumission d'une portion de l'eau résiduaire à une première purification via au moins un traitement physique (3) comprenant une filtration de l'eau résiduaire ;
- la soumission d'une autre portion de l'eau résiduaire et des concentrés résultant de la filtration (3) à une étape de traitement physico-chimique (2), où le traitement physico-chimique (2) comprend l'agitation de l'eau résiduaire et aussi une opération de sédimentation combinée à l'utilisation de coagulants et de floculants ;
- une étape de purification finale, comprenant une filtration biochimique (8) effectuée dans un bioréacteur à membrane contenant une ou plusieurs membranes, de l'eau provenant du traitement physico-chimique.

2. Procédé selon la revendication 1, **caractérisé en ce que** le polymère halogéné est un polymère de chlorure de vinyle.

3. Procédé selon la revendication 1, **caractérisé en ce que** les coagulants sont choisis parmi les sels de fer et les sels d'aluminium, et les floculants sont choisis parmi la silice activée et les polyélectrolytes.

4. Procédé selon la revendication 1, **caractérisé en ce que** la filtration (3) est une microfiltration ou une ultrafiltration.

5. Procédé selon la revendication 1 ou 4, **caractérisé en ce que**, outre et en aval de la filtration (3), une étape de purification chimique par échange d'ions ou une étape de purification physique par osmose inverse (4) est effectuée sur la perméat.

6. Procédé selon la revendication 1, **caractérisé en ce que** l'étape de purification finale de l'eau résiduaire (1) comprend, outre et en aval de la filtration biochimique (8), une étape (9) de purification physique comprenant un filtre multicouche ou de purification chimique comprenant un filtre à charbon actif.

7. Procédé selon la revendication 6, **caractérisé en ce que** l'étape de purification finale de l'eau résiduaire (1) comprend, outre et en aval de la filtration biochimique (8) et de l'étape de purification physique ou de purification chimique (9), une étape de purification par échange d'ions ou par osmose inverse (10).

8. Procédé selon la revendication 1, **caractérisé en ce que** l'eau obtenue est recyclée vers l'une des étapes afin de préparer le polymère halogéné.

9. Procédé selon la revendication 1, **caractérisé en ce que** l'eau obtenue est recyclée comme eau d'appoint vers l'étape de polymérisation afin de préparer le polymère halogéné.
